Europäisches Patentamt

European Patent Office

Office européen des brevets

(11) Numéro de publication : **0 425 365 B1**

# FASCICULE DE BREVET EUROPEEN

(45) Date de publication du fascicule du brevet :
**30.11.94 Bulletin 94/48**

(51) Int. Cl.$^5$ : **G02B 27/00, B64C 1/14**

(21) Numéro de dépôt : **90402977.4**

(22) Date de dépôt : **23.10.90**

(54) **Dispositif optique de correction des défauts introduits par un hublot sphérique utilisé hors d'axe.**

(30) Priorité : **27.10.89 FR 8914122**

(43) Date de publication de la demande :
**02.05.91 Bulletin 91/18**

(45) Mention de la délivrance du brevet :
**30.11.94 Bulletin 94/48**

(84) Etats contractants désignés :
**BE DE GB IT NL**

(56) Documents cités :
**WO-A-86/01598**
**US-A- 4 705 343**

(73) Titulaire : **THOMSON-CSF**
**173, Boulevard Haussmann**
**F-75008 Paris (FR)**

(72) Inventeur : **Bourgain, Jean-Louis**
**THOMSON-CSF,**
**SCPI,**
**Cédex 67**
**F-92045 Paris la Défense (FR)**
Inventeur : **Hubert, Charles**
**THOMSON-CSF,**
**SCPI,**
**Cédex 67**
**F-92045 Paris la Défense (FR)**
Inventeur : **Pepin, Christian**
**THOMSON-CSF,**
**SCPI,**
**Cédex 67**
**F-92045 Paris la Défense (FR)**
Inventeur : **Deler, Jean-Marie**
**THOMSON-CSF,**
**SCPI,**
**Cédex 67**
**F-92045 Paris la Défense (FR)**

(74) Mandataire : **Lincot, Georges et al**
**THOMSON-CSF,**
**SCPI,**
**B.P. 329,**
**50, rue Jean-Pierre Timbaud**
**F-92402 Courbevoie Cédex (FR)**

## Description

L'invention concerne un dispositif optique de correction des défauts introduits par un hublot sphérique d'un système optronique dont la ligne de visée ne passe pas par le centre de symétrie du hublot.

Un système optronique embarqué à bord d'un véhicule comporte un hublot lui permettant de voir à l'extérieur du véhicule. Lorsque le champ de visibilité doit être très large, il est connu d'utiliser un hublot polygonal constitué de plusieurs facettes planes, ou bien d'utiliser un hublot sphérique associé à un élément transparent formant deux dioptres coaxiaux, comme décrit dans le brevet US 4 705 343. Dans ce dernier cas, la ligne de visée du système optronique doit passer par le centre de symétrie du hublot, quelle que soit l'orientation donnée à la ligne de visée. Si cette condition n'était pas remplie, la résolution d'une image formée à partir de ces rayons lumineux serait moins bonne qu'en l'absence de hublot et la ligne de visée serait déviée de façon importante à la traversée du hublot.

Le fait de faire passer la ligne de visée par le centre de symétrie du hublot conduit à placer le hublot dans une position très saillante à l'extérieur du véhicule. Si ce véhicule est un avion, un hublot sphérique très saillant provoque des effets aérodynamiques néfastes. Si, en outre, le hublot sphérique est placé sur le nez de l'avion, entre le radome et la verrière du cokpit, il réduit le champ de vision du pilote.

Le but de l'invention est de proposer un dispositif permettant d'utiliser un hublot sphérique, sans avoir à lui donner une position très saillante à l'extérieur du véhicule porteur.

L'objet de l'invention est un dispositif optique de correction des défauts introduits par le fait que la ligne de visée ne passe pas par le centre du hublot, lorsque le centre du hublot est ramené vers l'intérieur du véhicule. Le hublot est alors moins saillant à l'extérieur du véhicule ce qui évite les inconvénients cités précédemment.

Selon l'invention, un dispositif optique pour un système optronique d'observation, comprenant un hublot sphérique et un morceau de matériau transparent ayant deux faces opposées qui sont des portions de surface ayant un axe de symétrie commun et formant deux dioptres, est caractérisé en ce que ledit axe de symétrie desdits deux dioptres passe par le centre de symétrie dudit hublot, et lesdits dioptres sont positionnés et dimensionnés de sorte qu'ils constituent avec ledit hublot un système optique afocal pour un faisceau de rayons lumineux parallèles audit axe de symétrie mais ne passant pas par le centre de symétrie dudit hublot, de façon à corriger les défauts introduits par ledit hublot.

La correction est encore bonne pour des rayons ayant une direction voisine de la ligne de visée.

L'invention sera mieux comprise et d'autres détails apparaîtront à l'aide de la description ci-dessous et des figures l'accompagnant :

- la figure 1 représente un hublot sphérique utilisé selon l'art antérieur, dans une position très saillante par rapport au véhicule porteur ;
- la figure 2 illustre le phénomène qui créerait des défauts si un hublot sphérique était utilisé sans dispositif de correction et sans placer la pupille d'entrée centrée sur le diamètre du hublot parallèle à la ligne de visée ;
- la figure 3 illustre le principe de fonctionnement du dispositif de correction selon l'invention ;
- la figure 4 représente schématiquement un exemple de réalisation du dispositif selon l'invention, et illustre son fonctionnement.
- la figure 5 représente schématiquement l'exemple de la figure 4 et le système optronique auquel il est associé.

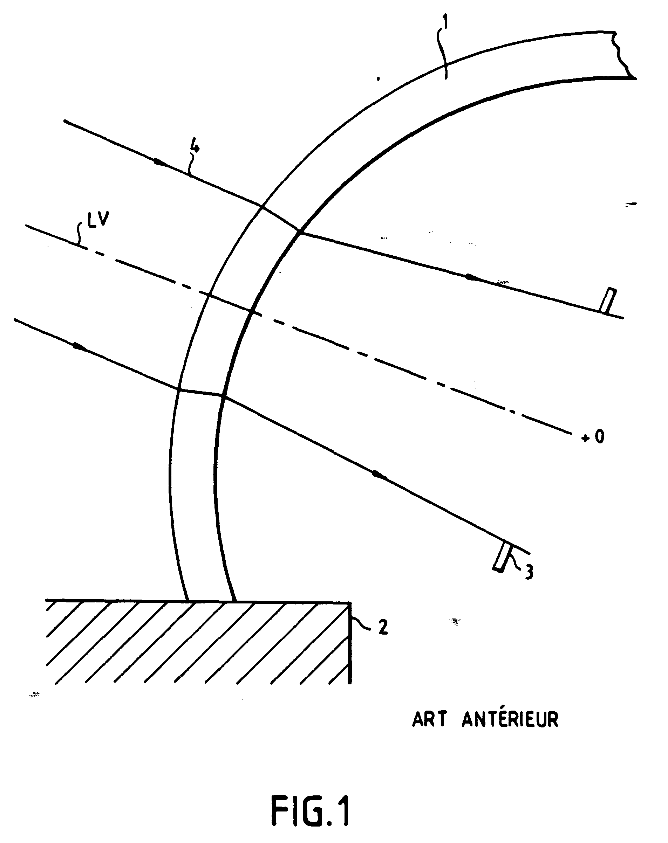

Sur la figure 1, un hublot sphérique 1 abrite le dispositif de pointage d'un système optronique représenté par sa une pupille d'entrée 3. Ce hublot 1 est placé en saillie par rapport à la paroi 2 du véhicule porteur, de telle sorte que le centre de symétrie O du hublot 1 est situé à une certaine distance de la paroi 2, à l'extérieur du véhicule.

La pupille d'entrée 3 est centrée sur le diamètre du hublot parallèle à la ligne de visée LV. Quand l'orientation de la ligne de visée LV est modifiée, la pupille 3 est déplacée de telle sorte que le centre de la pupille reste sur le diamètre du hublot paralèle à la ligne de visée LV. La position du centre de symétrie O est suffisamment extérieure pour permettre de déplacer la ligne de visée jusqu'à une position limite dans laquelle la ligne de visée est parallèle à la paroi 2, sans que le faisceau 4 des rayons entrant dans la pupille 3 ne soit occulté par la paroi 2. L'orientation de la ligne de visée LV, qui est liée à la position de la pupille d'entrée 3, est assurée par un dispositif de pointage comportant par exemple un miroir mobile, et non représenté sur la figure.

La ligne de visée LV passant par le centre de symétrie O du hublot 1, elle n'est pas déviée et chaque rayon lumineux du faisceau 4 traverse le hublot 1 sans que la symétrie du faisceau, autour de la ligne de visée LV, soit affectée. Le hublot 1 constitue deux dioptres centrés sur O. La réfraction sur ces dioptres provoque une divergence des rayons, mais celle-ci peut être compensée facilement en modifiant le réglage de mise au point du système optronique.

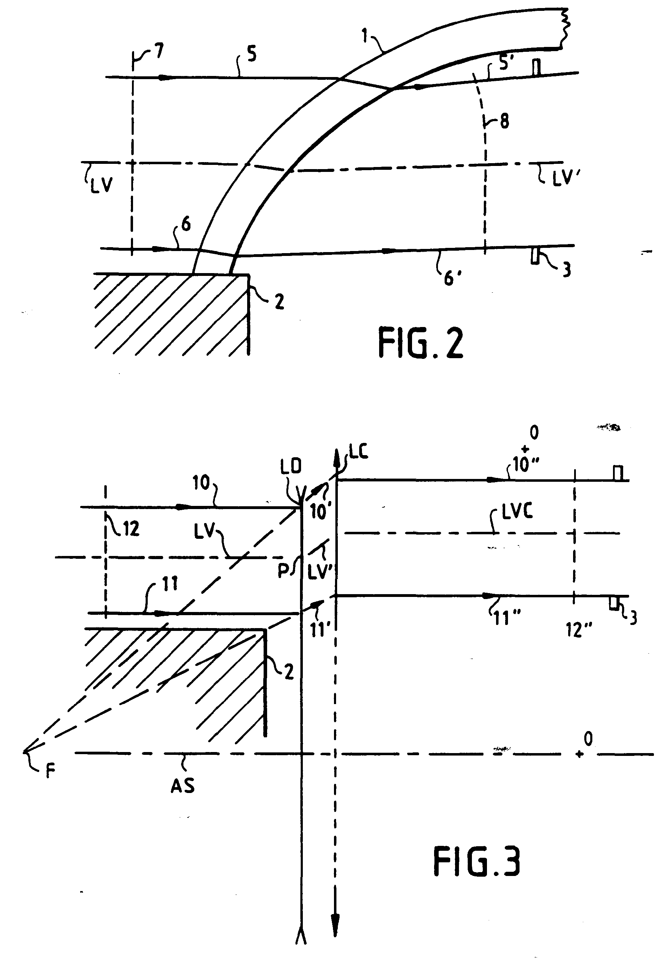

La figure 2 illustre le phénomène qui dégraderait la résolution des images observées par le système optronique, si le hublot 1 était placé de façon moins saillante par rapport à la paroi 2, en ne faisant plus passer la ligne de visée LV du système optronique par le centre O du hublot 1. Dans ce cas, la ligne de visée LV est déviée lors de son passage à travers le hublot 1, selon une ligne LV'.

Dans l'exemple représenté, le faisceau reçu par la pupille d'entrée 3 est constitué de rayons lumineux parallèles, 5 et 6, formant un faisceau autour de la ligne de visée LV, à l'extérieur du hublot 1. Ces rayons lumineux sont déviés de manière non identique par le hublot 1 et constituent ensuite des rayons 5′ et 6′ qui ne sont plus parallèles à la ligne de visée déviée LV′et qui ne sont plus parallèles entre eux.

Le faisceau lumineux étant constitué de rayons parallèles avant de traverser le hublot 1, il est constitué d'une onde plane 7. Après la traversée du hublot 1, il est constitué d'une onde 8 ayant une forme courbe, qui est très proche d'une portion de sphère, non symétrique par rapport à la ligne de visée LV′ déviée par le hublot 1. Cette déformation de la surface d'onde correspond au fait que les rayons ne parcourent pas des chemins optiques de longueurs identiques à travers le hublot 1. Le rayon 5 ayant un angle d'incidence élevé par rapport à la normale à la surface du hublot 1, il parcourt un chemin plus long, à l'intérieur du matériau constituant le hublot 1, que le rayon 6 ayant un faible angle d'incidence.

D'une manière générale, un faisceau de rayons parallèles à la ligne de visée LV, avant la traversée du hublot, n'est plus un faisceau de rayons parallèles à la ligne de visée LV′, après la traversée du hublot. Corrélativement, une surface d'onde plane perpendiculaire à la ligne de visée LV n'est plus une surface d'onde plane perpendiculaire à la ligne de visée LV′, après la traversée du hublot. Le dispositif selon l'invention a pour fonction de rétablir la planéité de la surface d'onde en rallongeant inégalement le chemin optique parcouru par chacun des rayons lumineux entrant dans la pupille d'entrée, pour compenser les différence de chemin optique provoquées par le hublot 1. Il rallonge plus le chemin optique des rayons qui ont le chemin optique le plus faible à travers le hublot 1.

Dans le cas ou les rayons 5 et 6 sont parallèles à la ligne de visée LV, la correction doit fournir des rayons 5′ et 6′ parallèles à la ligne de visée LV′. La surface de l'onde restituée doit avoir une forme plane, orthogonale à LV′.

La figure 3 représente schématiquement le principe de l'invention où le dispositif de correction selon l'invention est représenté par une lentille mince convergente. Sa distance focale et sa position sont choisies telles qu'elle constitue, avec le hublot, un système afocal, en première approximation.

Le hublot 1 étant constitué de deux dioptres concentriques, il peut être considéré comme une lentille divergente LD ayant un foyer F et un axe optique AS passant par O et parallèle à la ligne de visée LV. Considérons un faisceau de rayons parallèles à la ligne de visée LV, arrivant sur la lentille divergente LD. La ligne de visée LV arrive en un point P de la lentille LD, non situé sur son axe optique AS. Deux rayons, 10 et 11, parallèles à LV sont déviés et constituent des rayons 10′ et 11′ dont les prolongements passent par le foyer F de la lentille LD. Les rayons 10′ et 11′ ne sont pas parallèles à la ligne de visée LV′ déviée par LD, ni parallèles entre eux.

La parallélisme du faisceau peut être rétabli au moyen d'une lentille mince convergente LC ayant son foyer confondu avec le foyer F de la lentille LD et ayant le même axe optique AS que celle-ci. Les rayons 10′ et 11′ sont déviés par LC pour constituer des rayons 10″ et 11″ qui sont parallèles entre eux et parallèles aussi à la ligne de visée LVC déviée successivement par les deux lentilles. La ligne de visée LVC est parallèle à la ligne de visée LV.

Les lentilles LD et LC constituent un système afocal utilisé hors de son axe optique. Ce système afocal peut indifféremment avoir un grossissement égal à 1 ou différent de 1. Dans les deux cas, une onde plane perpendiculaire à la ligne de visée LV est restituée plane perpendiculaire à la ligne de visée LVC. Dans le cas où le grossissement est différent de 1, une onde plane perpendiculaire à une ligne formant un angle $\alpha$ avec LV en arrivant sur le hublot, émerge du dispositif de correction en formant une onde plane perpendiculaire a une ligne formant un angle égal à $\alpha$ multiplié par le grossissement avec la ligne LVC.

La figure 3 montre que le dispositif de correction est constitué d'une lentille convergente dont une partie n'est pas utile. Cette partie, qui est représentée en pointillés, peut être tronquée pour réduire l'encombrement du dispositif.

Des exemples de réalisation peuvent comporter selon le champ angulaire du système optronique et la finesse de la correction recherchée : un dioptre sphérique et un dioptre asphérique ou deux dioptres asphériques. Ils permettent une correction plus précise, surtout quand le champ angulaire est large.

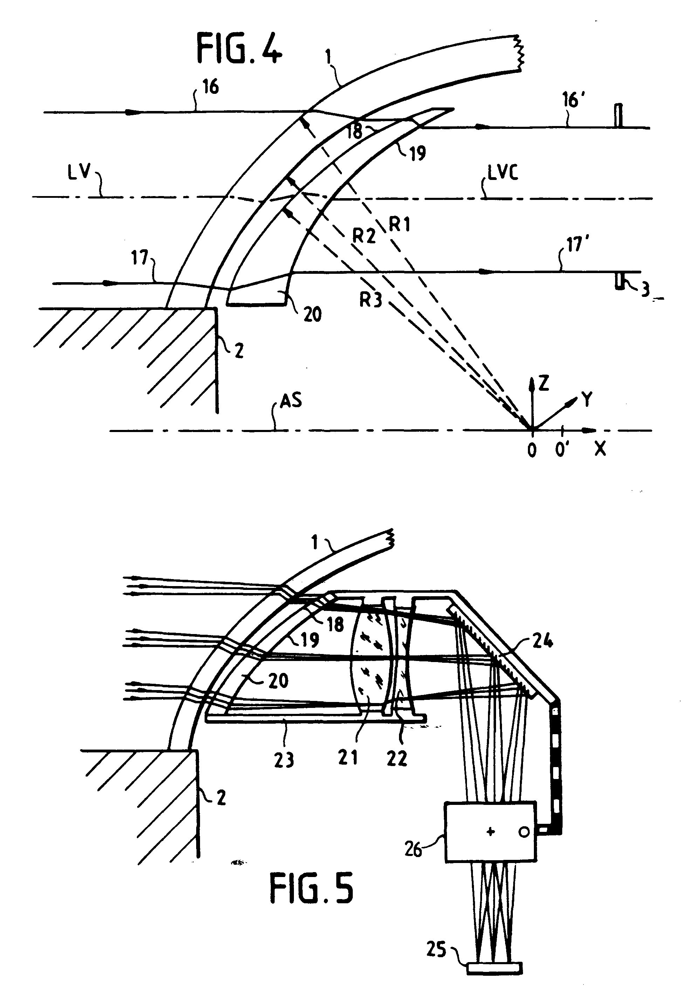

La figure 4 représente schématiquement un exemple de réalisation comportant un dioptre sphérique et un dioptre asphérique. La surface externe du hublot 1 a un rayon R1=129mm, et sa surface interne a un rayon R2=121mm. Le dispositif de correction est constitué par un morceau de matériau transparent 20 qui est identique au matériau constituant le hublot 1 et qui a un indice égal à 2,25. Il comporte un premier dioptre 18, sphérique, centré sur le centre de symétrie O du hublot 1 et ayant un rayon R3=117mm et un second dioptre 19 asphérique, qui est défini par une sphère de référence ayant un rayon de 115, 348mm et une surépaisseur E exprimée en fonction d'un paramètre $U=Y^2+Z^2$, par la formule suivante exprimée en millimètres :

$$E = 4{,}238.10^{-2} - 8{,}595.10^{-7}.U - 9{,}744.10^{-9}.U^2 + 2{,}631.10^{-12}.U^3 - 3{,}101.10^{-16}.U^4 + 1{,}589.10^{-20}.U^5.$$

Un repère orthonormé OX, OY, OZ est défini au centre de symétrie O, avec un axe OX parallèle à la ligne de visée LV. La sphère de référence est centrée en un point O′ de coordonnées X=6,343mm Y=Z=0. Le repère tourne autour du point O en même temps que le dispositif de correction 20 lorsque la ligne de visée LV est déplacée. Les deux dioptres du dispositif de correction sont des portions de surfaces ayant un axe de symétrie de révolution, AS, confondu avec OX.

La ligne de visée LV est restituée selon Aine ligne de visée corrigée, notée LVC, qui est parallèle à la ligne de visée LV. Un faisceau de rayons 16, 17 parallèles à la ligne de visée LV est restitué en un faisceau de rayons 16′ et 17′ parallèles à la ligne de visée corrigée LVC. La correction est suffisamment précise pour un faisceau couvrant un champ de quelques degrés, c'est-à-dire que des faisceaux de rayons parallèles inclinés de quelques degrés par rapport à LV incidents sur le hublot, émergent en faisceaux parallèles du dispositif de correction.

L'équation précédente définit la surface asphérique du dispositif de correction 20. Cette équation est déterminée après avoir calculé les coordonnées X, Y, Z d'un grand nombre de points de cette surface. Les coordonnées de chaque point sont calculées telles qu'un rayon lumineux passant par ce point a un chemin optique de même longueur que le chemin optique d'un rayon lumineux de référence, ces deux rayons lumineux étant supposés arriver sur le hublot 1 parallèlement à une ligne de visée LV donnée.

Cet exemple de réalisation permet de former une image d'un objet étendu situé à l'infini, dans la direction de l'axe OX, et ayant un rayon angulaire de 3°, à travers une pupille d'entrée, 3, ayant un diamètre de 40mm et centrée en un point de coordonnées X=40mm ; Y=0 ; Z=78mm.

Le dispositif de correction 20 pourrait avoir une symétrie de révolution autour de l'axe OX. En fait, seule est utile la partie du dispositif située en face de la pupille d'entrée 3 et qui est traversée par les rayons reçus par cette pupille. Un procédé de réalisation peut consister à fabriquer une lentille comportant deux dioptres ayant une symétrie de révolution, puis à découper une partie de cette lentille pour ne conserver que la partie utile. Un autre procédé consiste à réaliser un prisme puis à façonner une face sphérique et une face asphérique sur ce prisme. Ces deux procédés de réalisation sont classiques pour l'homme de l'art.

La figure 5 représente schématiquement en coupe, l'association de ce second exemple de réalisation avec une tête de visée comportant un dispositif de pointage constitué d'une lentille convergente 21 associée à une lentille divergente 22 et un miroir de renvoi 24. Une monture 23 supporte à la fois le dispositif de correction 18 à 20, les lentilles 21 et 22, et le miroir 24. Cette monture est de plus partiellement liée à un système de miroirs de renvois 26 permettant d'acheminer les rayons vers le capteur d'image 25 quelle que soit la ligne de visée. La monture 23 est mobile en rotation autour de deux axes orthogonaux qui concourent au centre de symétrie O du hublot 1. Elle est mue par deux servomécanismes classiques, non représentés. La figure représente le trajet des rayons lumineux formant une image d'un objet étendu situé à l'infini sur un capteur d'images 25, qui est fixe. Ainsi, le dispositif de correction 18 à 20 suit les déplacements de la ligne de visée LV.

Le dispositif selon l'invention peut être associé à n'importe quel dispositif de pointage d'une ligne de visée comportant une pupille d'entrée mobile en rotation autour du centre de symétrie du hublot sphérique.

Le dispositif de correction et le hublot peuvent être constitués du même matériau si la variation de son indice est suffisamment faible dans le domaine de longueur d'onde du système optronique. Sinon, le dispositif de correction peut être constitué d'un bloc 20 de matériau différent de celui du hublot 1 et tel que sa dispersion chromatique compense celle du hublot, selon la technique classique des doublets.

Dans d'autres exemples de réalisation, le dispositif de correction peut être constitué de deux blocs de matériaux transparents différents, et tels que la dispersion chromatique du hublot et du dispositif de correction soit minimisée dans tout le domaine de longueur d'onde du système optronique.

## Revendications

1. Dispositif optique pour un système optronique d'observation, ce dispositif comprenant un hublot sphérique (1) et un morceau de matériau transparent (20) ayant deux faces opposées qui sont des portions de surface ayant un axe de symétrie commun (AS) et formant deux dioptres (18, 19), ce dispositif étant caractérisé en ce que ledit axe de symétrie (AS) desdits deux dioptres passe par le centre de symétrie (O) dudit hublot (1), et lesdits dioptres (18, 19) sont positionnés et dimensionés de sorte qu'ils constituent avec ledit hublot un système optique afocal pour un faisceau de rayons lumineux (16, 17) parallèles audit axe de symétrie (AS) mais ne passant pas par le centre de symétrie (O) du dit hublot (1), de façon à corriger les défauts introduits par ledit hublot.

2. Dispositif selon la revendication 1, caractérisé en ce que les deux dioptres sont sphériques et constituent une lentille convergente (LC).

3. Dispositif selon la revendication 1, caractérisé en ce que l'un des dioptres (18) est sphérique, centré sur le centre de symétrie (O) du hublot ; et en ce que l'autre dioptre (19) est asphérique.

4. Dispositif selon la revendication 1, caractérisé en ce que le morceau de matériau transparent (20) est constitué d'un matériau différent du matériau du hublot (1), et tel que sa dispersion chromatique compense celle du hublot (1).

5. Dispositif selon la revendication 1, caractérisé en ce qu'il comporte deux morceaux de matériaux différents et accolés, et tels que la dispersion chromatique du dispositif soit minimale.

6. Dispositif selon la revendication 1, caractérisé en ce que ledit morceau de matériau transparent (20) est monté de façon à être mobile en rotation autour du centre de symétrie (O) du hublot (1), pour suivre les déplacements de la ligne de visée (LV).

**Patentansprüche**

1. Optische Vorrichtung für ein Optronik-Beobachtungssystem mit einem sphärischen Fenster (1) und einem Stück transparenten Materials (20), das zwei gegenüberliegende Oberflächen besitzt, welche Oberflächenabschnitte mit einer gemeinsamen Symmetrieachse (AS) sind und zwei Diopter (18, 19) bilden, dadurch gekennzeichnet, daß die Symmetrieachse (AS) der beiden Diopter durch das Symmetriezentrum (O) des Fensters (1) verläuft und daß die beiden Diopter (18, 19) so angeordnet und gestaltet sind, daß sie zusammen mit dem Fenster ein afokales optisches System für ein Bündel von zur Symmetrieachse (AS) parallelen, aber nicht durch das Symmetriezentrum (O) des Fensters (1) verlaufenden Lichtstrahlen (16, 71) bilden, so daß die durch das Fenster hervorgerufenen Fehler korrigiert werden.

2. Vorrichtung nach Anspruch 1, dadurch gekennzeichnet, daß die beiden Diopter sphärische Diopter sind und eine Sammellinse (LC) bilden.

3. Vorrichtung nach Anspruch 1, dadurch gekennzeichnet, daß einer der Diopter (18) sphärisch ist und auf das Symmetriezentrum (O) des Fensters zentriert ist, während der andere Diopter (19) asphärisch ist.

4. Vorrichtung nach Anspruch 1, dadurch gekennzeichnet, daß das Stück transparenten Materials (20) aus einem anderen Material als das Fenster (1) besteht, wobei seine chromatische Dispersion diejenige des Fensters (1) kompensiert.

5. Vorrichtung nach Anspruch 1, dadurch gekennzeichnet, daß sie zwei aneinander anliegende Stücke unterschiedlichen Materials besitzt, derart, daß die chromatische Dispersion der Vorrichtung möglichst gering ist.

6. Vorrichtung nach Anspruch 1, dadurch gekennzeichnet, daß das Stück transparenten Materials (20) so montiert ist, daß es um das Symmetriezentrum (O) des Fensters (1) drehbar ist, um den Verschiebungen der Visierachse (LV) folgen zu können.

**Claims**

1. Optical device for an optroelectronic observation system, this device comprising a spherical window (1) and a piece of transparent material (20) having two opposite faces which are surface portions having a common axis of symmetry (AS) and forming two diopters (18, 19), this device being characterized in that the said axis of symmetry (AS) of the said two diopters passes through the centre of symmetry (O) of the said window (1), and the said diopters (18, 19) are positioned and dimensioned so that, with the said window, they consitute an afocal optical system for a beam of light rays (16, 17) parallel to the said axis of symmetry (AS) but not passing through the centre of symmetry (O) of the said window (1), in such a way as to correct the defects introduced by the said window.

2. Device according to Claim 1, characterized in that the two diopters are spherical and constitute a converging lens (LC).

3. Device according to Claim 1, characterized in that one of the diopters (18) is spherical, centered on the centre of symmetry (O) of the window; and in that the other diopter (19) is aspherical.

4. Device according to Claim 1, characterized in that the piece of transparent material (20) consists of a material different from the material of the window (1), and such that its chromatic dispersion compensates for that of the window (1).

5. Device according to Claim 1, characterized in that it includes two pieces of different materials placed together, such that the chromatic dispersion of the device is minimal.

6. Device according to Claim 1, characterized in that the said piece of transparent material (20) is mounted in such a way as to be movable in rotation about the centre of symmetry (O) of the window (1), in order to follow the movements of the sight line (LV).

ART ANTÉRIEUR

FIG.1

FIG.2

FIG.3

7

# FIG.4

# FIG.5

8